# EUROPÄISCHE PATENTANMELDUNG

(11) **EP 2 230 505 A1**
(43) Veröffentlichungstag der Anmeldung: **22.09.2010**
(21) Anmeldenummer: 10150919.8
(22) Anmeldetag: 18.01.2010
(51) Int. Cl.: G01N 21/27

(54) **Auswertevorrichtung zur Auswertung von Messsignalen, Messvorrichtung und Verfahren zur Aufnahme und Auswertung von Messsignalen**

(30) Priorität: 18.03.2009 DE 102009001627
(71) Anmelder: Robert Bosch GmbH, 70442 Stuttgart (DE)
(72) Erfinder: Koop, Paul, 70563, Stuttgart (DE); Dittmer, Helge, 72072 Tuebingen (DE)

(57) **Zusammenfassung**

Die Erfindung betrifft unter anderem eine Auswertevorrichtung zur Auswertung von analogen Messsignalen (S1) eines Detektors (2), insbesondere eines IR-Detektors (2), wobei die Auswertevorrichtung (6) mindestens aufweist:
eine Analog-Digital-Wandlereinrichtung (4) zur Aufnahme und Digitalwandlung des analogen Messsignals (S1, S1-1) des Detektor (2) oder eines hieraus gebildeten analogen Signals (S2) und Bildung eines digitalen Messsignals (S3), und
eine Steuereinrichtung (5) zur Aufnahme des digitalen Messsignals (S3).

Erfindungsgemäß ist vorgesehen, dass
die Auswertevorrichtung (6) in einer ersten Messung ein erstes analoges Messsignal (S1-1) aufnimmt und das aus dem ersten analogen Messsignal (S1-1) gebildete digitale Messsignal (S3) abspeichert, und in einer zweiten Messung ein zweites analoges Messsignal (S1-2) aufnimmt, und
eine Subtrahiereinrichtung (10) vorgesehen ist, die das analoge Messsignal (S1-2) der zweiten Messung und ein in Abhängigkeit des gespeicherten digitalen Messsignals (S3) der ersten Messung gebildetes analoges Vergleichssignal (S5) aufnimmt und ein Differenzsignal (S6) bildet.

Das Differenzsignal (S6) kann anschließend verstärkt, gegebenenfalls gefiltert, und digitalisiert werden.

## Beschreibung

### Stand der Technik

In der spektroskopischen Gassensorik werden unterschiedliche Detektoren und Verfahren zur Umwandlung infraroter Strahlung (IR-Strahlung) in elektrische Spannungssignale verwendet, bei denen die IR-Strahlung absorbiert wird und die sich in Abhängigkeit der Intensität der einfallenden IR-Strahlung einstellende Temperatur ermittelt wird. In Thermopile-Elementen wird der Seebeck-Effekt ausgenutzt. In einem pyroelektrischen Detektor wird der pyroelektrische Effekt ausgenutzt, bei dem in einem piezoelektrischen Kristall eine elektrische Spannung erzeugt wird, die bei unterschiedlichen Temperaturen unterschiedliche Werte annimmt. Das analoge Messsignal wird im allgemeinen von einer Auswertevorrichtung aufgenommen, die eine Analog-Digitalwandlereinrichtung zur Digitalisierung des analogen Messsignals oder eines verstärkten analogen Signals und weiterhin eine Steuereinrichtung zur Aufnahme des so gebildeten digitalen Messsignals aufweist.

Bei Detektoren zweiter Art werden zeitliche Temperaturänderungen ermittelt, so dass der Detektor z. B. gepulst bestrahlt wird. Nachteilhaft an derartigen Detektoren ist jedoch, dass sie im Allgemeinen einer überlagerten Offsetspannung unterliegen, die oftmals erheblich größer als das eigentliche Nutzsignal ist und deren Höhe von verschiedenen Faktoren wie z. B. Fertigungstoleranzen und Bauteilalterung abhängt. Da das Nutzsignal z. B. lediglich im Bereich einiger Millivolt liegt, wird dieses üblicherweise für eine genaue Auswertung hoch verstärkt. Nachteilhaft ist hierbei jedoch, dass entsprechend die Offsetspannung mitverstärkt wird.

Zur Signalaufbereitung sind Rauschfilter bekannt, die ein Rauschen als hochfrequente Signalanteile erkennen und unterdrücken; hierdurch kann jedoch die unterlegte Offsetspannung nicht ermittelt oder berücksichtigt werden.

### Offenbarung der Erfindung

Erfindungsgemäß werden eine Auswertevorrichtung zur Auswertung von Messsignalen bzw. zur Aufnahme und Auswertung von Messsignalen, eine Messvorrichtung mit dieser Auswertevorrichtung sowie ein Verfahren zur Aufnahme und Auswertung von Messsignalen geschaffen.

Der Erfindung liegt der Gedanke zu Grunde, die Offsetspannung bereits von dem analogen Messsignal, d. h. vor der Analog-Digital-Wandlung, zu subtrahieren und hierzu Messungen in mindestens zwei verschiedenen Messzuständen durchzuführen, bei denen vorzugsweise keine oder nur eine geringe Änderung der Offsetspannung zu erwarten ist. Vorteilhafterweise kann eine erste Messung in einem ersten Messzustand durchgeführt werden, in dem zusätzlich zu der Offsetspannung kein weiteres Nutzsignal zu erwarten ist, so dass dieses erste Messsignal direkt als Offsetspannung ermittelt wird.

Erfindungsgemäß erfolgt die Speicherung der analogen Offsetspannung vorteilhafterweise digital, so dass eine Analog-Digitalwandlung des ersten Messsignals, digitale Speicherung und nachfolgende Ausgabe des digitalen Wertes der Offsetspannung mit Digital-Analogwandlung erfolgt, um dann die analoge Offsetspannung von dem Messsignal der zweiten Messung zu subtrahieren.

In einer ersten Messung wird somit das analoge Messsignal in einem ersten Messzustand ermittelt, der bei einem IR-Detektor insbesondere bei ausgeschalteter IR-Strahlungsquelle sein kann. Diese erste Messung kann somit direkt zur Ermittlung der Offsetspannung dienen. Die nachfolgende zweite Messung in dem zweiten Messzustand dient als eigentliche Messung; bei einem IR-Detektor kann sie somit bei eingeschalteter IR-Strahlungsquelle erfolgen.

In der zweiten Messung wird somit das in der ersten Messung gespeicherte digitale Messsignal wiederum in ein analoges Messsignal durchgeführt; hierzu kann direkt das gespeicherte digitale Messsignal oder ein hieraus gebildetes Signal verwendet werden. Dieses analoge Vergleichssignal wird von dem nunmehr ermittelten analogen Messsignal bereits im analogen Bereich abgezogen, d. h. durch eine analoge Subtrahiereinrichtung, die als solche bekannt ist. Somit wird ein analoges Differenzsignal ermittelt, das nachfolgend ggf. verstärkt und gefiltert werden kann, und wiederum digitalisiert wird, so dass ein digitales Differenzsignal als Ergebnis der eigentlichen Messung gewonnen wird.

Die beiden Messungen werden vorteilhafterweise unmittelbar aufeinander folgend durchgeführt, damit sich die Umgebungsbedingungen des Detektors und somit seiner Offsetspannung möglichst nicht oder nur gering ändern. Bei Verwendung von z. B. gepulster Strahlung können die Messungen mit der Pulsdauer der Strahlungsquelle abgestimmt werden bzw. Vielfache voneinander sein.

Die Erfindung weist hierbei einige Vorteile auf. Es kann die parasitäre Offsetspannung direkt im analogen Bereich kompensiert werden, so dass nachfolgend eine hohe Verstärkung des Nutzsignals bei niedrigen Betriebsspannungen und ohne Anpassung der Auswerteschaltung möglich ist. Hierbei können die Verstärkung und Filterung jeweils angepasst werden. Indem erfindungsgemäß die Offsetspannung jeweils aktuell ermittelt wird, kann ein genaueres Ergebnis als bei z. B. bei nachträglicher Subtraktion eines einmalig vorab ermittelten oder berechneten Wertes erreicht werden. Somit kann ein qualitativ gutes Messergebnis gewonnen werden.

Eine Filterung zur Rauschunterdrückung kann wahlweise am analogen Nutzsignal oder an dem durch Digitalisierung gewonnen Signal durchgeführt werden.

### Kurze Beschreibung der Zeichnungen

- Fig. 1: zeigt eine erfindungsgemäße Messvorrichtung gemäß einer Ausführungsform zur Messung einer Strahlungsintensität,
- Fig. 2: ein Flussdiagramm eines erfindungsgemäßen Messverfahrens.

### Beschreibung der Ausführungsformen

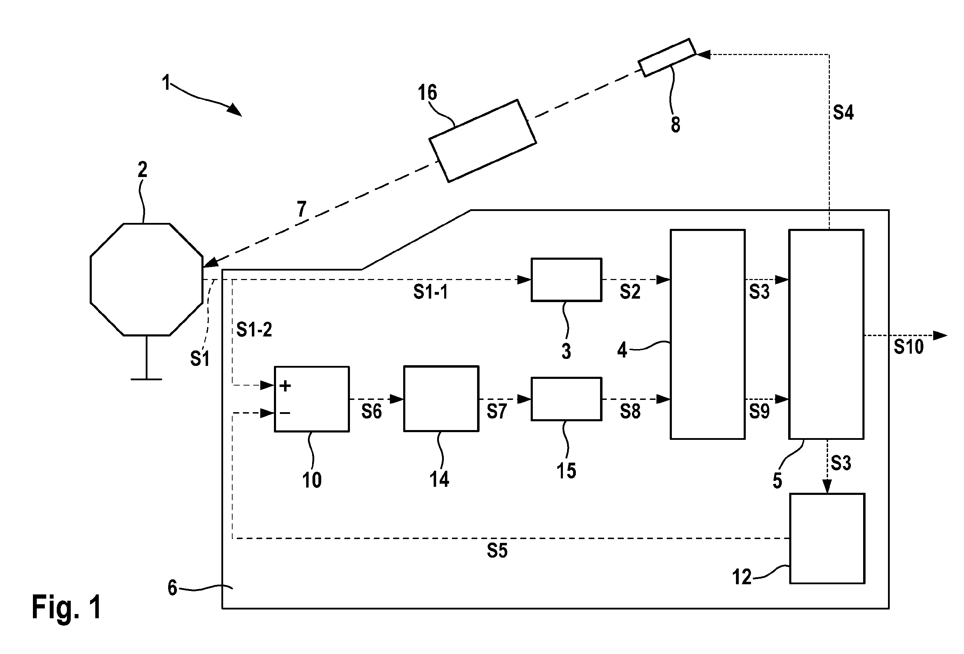

Eine in Fig. 1 gezeigte Messvorrichtung 1 dient zur Messung der Intensität einfallender IR- Strahlung 7. Sie weist einen Detektor 2 auf, der die einfallende IR-Strahlung 7 aufnimmt. Der Detektor 2 ist vorteilhafterweise ein pyroelektrischer Detektor, der sich in Abhängigkeit der Intensität der auftreffenden IR-Strahlung 7 erwärmt und in Abhängigkeit seiner Temperatur ein Messsignal S1 als analoges Spannungssignal ausgibt. Weiterhin kann der Detektor 2 jedoch auch z. B. ein Thermopile-Sensor sein, der durch z. B. Kaskadierung mehrerer Thermopile-Elemente gebildet ist, die jeweils durch Kontaktierung von Leiterbahnen aus Materialien mit unterschiedlichem Seebeck-Koeffizienten gebildet werden und in Abhängigkeit der Temperaturunterschiede ihrer Kontaktierungspunkte das analoge Messsignal S1 erzeugen. Weiterhin kann der Detektor 2 auch z. B. eine bolometrische Messung durchführen.

Der Detektor 2 gibt das analoge Messsignal S1 an eine erfindungsgemäße Auswertevorrichtung 6, die die weiter unten detaillierter beschriebenen Bestandteile 3, 4, 5, 10, 12, 14, 15 umfasst. Hierbei wird das analoge Messsignal S1 zunächst an ein analoges Filter 3 zur Rauschunterdrückung gegeben, das ein gefiltertes analoges Messsignal S2 an einen Analog-Digital-Wandler (ADC) 4 ausgibt, der eine Digitalisierung des analogen Messsignals S2 durchführt und ein digitales Messsignal S3 an eine Steuereinrichtung 5 ausgibt, die z. B. ein Mikroprozessor sein kann. Die Steuereinrichtung 5 steuert eine IR-Strahlungsquelle 8 mit Steuersignalen S4 an; alternativ hierzu kann die IR-Strahlungsquelle 8 auch von einer weiteren Steuereinrichtung angesteuert werden und die Steuereinrichtung 5 durch ein entsprechendes Zustandsignal über den jeweiligen Zustand der IR-Strahlungsquelle 8 informiert werden.

Das analoge Messsignal S1 setzt sich hierbei im wesentlichen aus einem Nutzsignal und einem Offset zusammen, wobei dieser Offset von verschiedenen Faktoren abhängig ist, z. B. Fertigungstoleranzen des Detektors 2, seiner Bauteilhalterung, der Umgebungstemperatur usw. abhängt, jedoch nicht oder im wesentlichen nicht von der Intensität der IR-Strahlung 7.

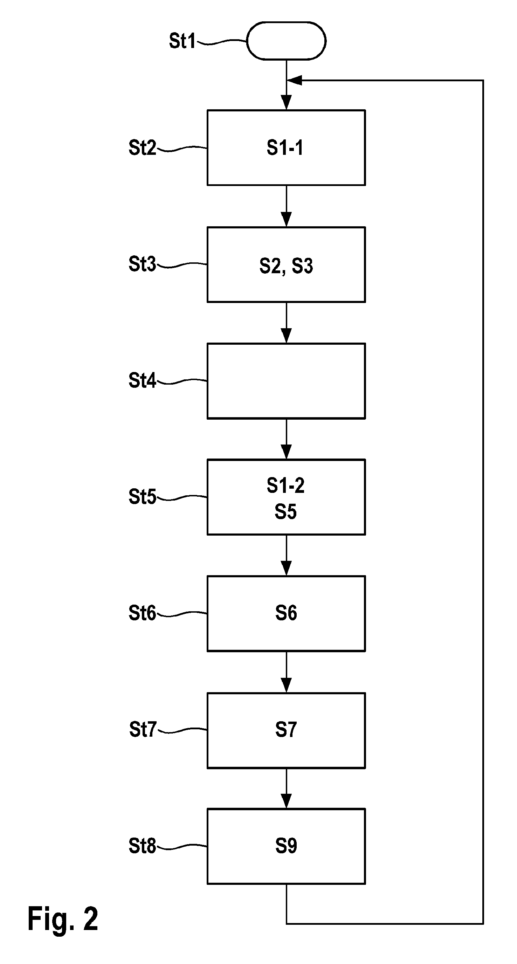

Erfindungsgemäß wird gemäß Fig. 2 die Messung in einem Schritt St1 gestartet und nachfolgend in Schritt St2 eine erste Messung zunächst ohne einfallende IR-Strahlung 7, d.h. bei ausgeschalteter IR- Strahlungsquelle 8 durchgeführt. Das erste analoge Messsignal S1-1 der ersten Messung wird somit im Wesentlichen durch den Offset bzw. die Offsetspannung gebildet. Das erste analoge Messsignal S1-1 wird in Schritt St3 gefiltert und von dem ADC 4 digitalisiert und in Schritt St4 als erstes digitales Messsignal S3 von der Steuereinrichtung 5 für die nachfolgende Messung gespeichert; diese Speicherung kann intern in der Steuereinrichtung 5 oder auch extern erfolgen.

In dem nachfolgenden Schritt St5 wird die IR-Strahlungsquelle 8 angeschaltet, so dass IR-Strahlung 7 auf den IR-Detektor 2 fällt und dieser in Abhängigkeit der einfallenden IR-Strahlung 7 ein zweites analoges Messsignal S1-2 ausgibt. Das zweite analoge Messsignal S1-2 wird einem Subtrahierer 10 auf den Plus- Eingang zugeführt. Weiterhin gibt die Steuereinrichtung 5 das zuvor bei der ersten Messung gespeicherte erste digitale Messsignal S3 - oder ein hieraus errechnetes digitales Messsignal - an einen Digital-Analog-Wandler 12, der somit ein analoges Vergleichssignal S5 auf den Minus-Eingang des Substrahierers 10 ausgibt.

Das analoge Vergleichssignal S5 entspricht somit dem ersten analogen Messsignal S1-1 der ersten Messung bzw. Vergleichmessung und stellt somit im Wesentlichen die analoge Offsetspannung dar. Der Subtrahierer 10 gibt nachfolgend in Schritt St6 ein ermitteltes analoges Differenzsignal S6 an einen Verstärker 14 aus, der somit ein verstärktes Differenzsignal S7 an einen Filter 15 ausgibt, der wiederum ein gefiltertes analoges Differenzsignal S8 an den Analog-Digital-Wandler 4 ausgibt. Hierzu kann der Analog-Digital-Wandler 4 zwei Kanäle aufweisen; alternativ hierzu kann jedoch auch der Filter 15 mit dem Filter 3 identisch sein, so dass die Signale über den gleichen Kanal des Analog-Digital-Wandlers 4 laufen. Der Analog-Digital-Wandler 4 gibt nachfolgend in Schritt St7 ein digitales Differenzsignal S9 an die Steuereinrichtung 5, die in Schritt St8 dieses Signal zwischenspeichert oder direkt weiterverarbeitet und in Abhängigkeit davon ein Ausgangssignal S10 als Ergebnis ausgibt, wobei S10 auch mit S9 identisch sein kann.

Die erfindungsgemäße Messvorrichtung 1 kann insbesondere als spektroskopischer Gassensor verwendet werden, indem die von der IR-Strahlungsquelle 8 ausgegebene IR-Strahlung 7 durch eine Messstrecke 16 gelangt, in der z. B. ein Gasgemisch aufgenommen ist, in dem die Konzentration relevanter Gase oder Gasbestandteile zu bestimmen ist. Die IR-Strahlung 7 wird entsprechend der Konzentration relevanter Gase oder Gasbestandteile, z. B. dem Kohlendioxidanteil, absorbiert. Hierbei kann ggf. ein hier nicht gezeigte Spektralfilter vor dem Detektor 2 angebracht sein, um einen relevanten Wellenlängenbereich der IR-Strahlung herauszufiltern.

Grundsätzlich ist es auch möglich, die erste Messung nicht als Leer-Messung mit ausgeschalteter Strahlungsquelle 8 durchzuführen, sondern in den beiden Messungen unterschiedliche Ansteuerungen der Strahlungsquelle 8 vorzunehmen und nachträglich den Offset aus einer Differenz der Messsignale S1-1 und S2-2 oder auch weiterer Messsignale zubestimmen. Erfindungsgemäß wird jedoch gerade bei einer ersten Messung mit ausgeschalteter Strahlungsquelle 8 ein großer Vorteil erzielt, da das erste analoge Messsignal S1-1 direkt als Offsetspannung gewertet werden kann.

Der Detektor 2 kann erfindungsgemäß grundsätzlich auch ein Detektor eines anderen Messtyps sein, der in zwei aufeinander folgenden Messungen, d.h. einer Leer-Messung bzw. Messung bei ausgeschaltetem Einwirken einer physikalischen Größe, und einer nachfolgenden eigentlichen Messung verwendet wird, womit ein Nutzsignal von einer in beiden Messungen gleichen oder etwa gleichen Offsetspannung getrennt werden kann.

Die gesamte Auswertevorrichtung 6 kann als integrierter Schaltkreis ausgebildet sein.

## Patentansprüche

1. Auswertevorrichtung zur Auswertung von analogen Messsignalen (S1) eines Detektors (2), insbesondere eines IR-Detektors (2), wobei die Auswertevorrichtung (6) mindestens aufweist:
eine Analog-Digital-Wandlereinrichtung (4) zur Aufnahme und Digitalwandlung des analogen Messsignals (S1, S1-1) des Detektor (2) oder eines hieraus gebildeten analogen Signals (S2) und Bildung eines digitalen Messsignals (S3), und
eine Steuereinrichtung (5) zur Aufnahme des digitalen Messsignals (S3),
**dadurch gekennzeichnet, dass**
die Auswertevorrichtung (6) in einer ersten Messung ein erstes analoges Messsignal (S1-1) aufnimmt und das aus dem ersten analogen Messsignal (S1-1) gebildete digitale Messsignal (S3) abspeichert, und in einer zweiten Messung ein zweites analoges Messsignal (S1-2) aufnimmt, und
eine Subtrahiereinrichtung (10) vorgesehen ist, die das analoge Messsignal (S1-2) der zweiten Messung und ein in Abhängigkeit des gespeicherten digitalen Messsignals (S3) der ersten Messung gebildetes analoges Vergleichssignal (S5) aufnimmt und ein Differenzsignal (S6) bildet.

2. Auswertevorrichtung (6) nach Anspruch 1, **dadurch gekennzeichnet, dass** sie weiterhin eine Digital-Analog- Wandlereinrichtung (12) zur Bildung des analogen Vergleichssignals (S5) aufweist,
wobei die Steuereinrichtung (5) das digitale Messsignal (S3) der ersten Messung aufnimmt und abspeichert und nachfolgend das gespeicherte digitale Messsignal (S3) der ersten Messung oder ein hieraus gebildetes digitales Signal an die Digital-Analog- Wandlereinrichtung (12) ausgibt, die das analoge Vergleichssignal (S5) bildet und an die Subtrahiereinrichtung (10) ausgibt, die das analoge Vergleichssignals (S5) als Offset von dem analogen Messsignal (S1-2) der zweiten Messung subtrahiert.

3. Auswertevorrichtung nach Anspruch 1 oder 2, **dadurch gekennzeichnet, dass** die Steuereinrichtung (5) in den beiden Messungen eine Einrichtung (8), z. B. eine IR-Strahlungsquelle (8), zur Beeinflussung einer Messgröße (7) des Detektors (2) unterschiedlich beeinflusst.

4. Auswertevorrichtung (6) nach einem der vorherigen Ansprüche, **dadurch gekennzeichnet, dass** die Analog-Digital-Wandlereinrichtung (4) oder eine andere Analog-Digital-Wandlereinrichtung das von der Subtrahiereinrichtung (10) gebildete analoge Differenzsignal (S6) oder ein hieraus gebildetes analoge Signal (S7, S8) aufnimmt und digitalisiert.

5. Auswertevorrichtung nach Anspruch 4, **dadurch gekennzeichnet, dass** sie eine Verstärkereinrichtung (14) aufweist, die das analoge Differenzsignal (S6) aufnimmt und verstärkt.

6. Auswertevorrichtung nach einem der vorherigen Ansprüche, **dadurch gekennzeichnet, dass** sie mindestens eine analoge oder digitale Filtereinrichtung (3, 15) zur Rauschunterdrückung aufweist, die das analoge Messsignal (S1-1) der ersten Messung und/oder das hieraus gebildete digitale Messsignal (S3) und/oder das analoge Differenzsignal (S6) und/oder oder ein aus diesen Signalen gebildetes analoges Signal (S7) oder digitales Signal (S9) filtert.

7. Messvorrichtung (1), die mindestens aufweist:
eine Auswertevorrichtung (6) nach einem der vorherigen Ansprüche,
einen Detektor (2), der das analoge Messsignal (S1, S1-1, S1-2) ausgibt, und
eine Einrichtung (8), die in den beiden Messungen die Messgröße (7) unterschiedlich beeinflusst,
wobei die Steuereinrichtung (5) Steuersignale (S4) zur Beeinflussung der Messgröße (7) an die Einrichtung (8) ausgibt und/oder von der Einrichtung (8) Zustandsignale über die Beeinflussung der Messgröße aufnimmt.

8. Messvorrichtung nach Anspruch 7, **dadurch gekennzeichnet, dass**
der Detektor (2) ein IR-Detektor (2) ist, und
die Einrichtung (8) eine IR-Strahlungsquelle (8) zum Aussenden von IR-Strahlung (7) ist,
wobei der IR-Detektor (2) zumindest einen Teil der von der IR- Strahlungsquelle (8) ausgesandten IR-Strahlung (7) detektiert, und
die IR-Strahlungsquelle (8) in der ersten Messung ausgeschaltet ist und in der zweiten Messung eingeschaltet ist.

9. Messvorrichtung nach Anspruch 7 oder 8, **dadurch gekennzeichnet, dass** der IR-Detektor (2) ein pyroelektrischer Detektor oder Thermopile-Detektor ist.

10. Messvorrichtung nach einem der Ansprüche 7 bis 9, **dadurch gekennzeichnet, dass** sie ein Teil eines spektroskopischen Gassensors ist und die von der IR-Strahlungsquelle ausgesandte IR-Strahlung (7) durch eine Messstrecke (16) gelangt und die Steuereinrichtung (5) aus den Messungen eine Konzentration eines Gasbestandteils der Messstrecke (16) ermittelt und ein Ausgangssignal (S10) ausgibt.

11. Verfahren zur Aufnahme und Auswertung von Messsignalen (S1, S1-1, S1-2), mit mindestens folgenden Schritten:
Durchführung einer ersten Messung mit einem Detektor (2) und Aufnahme eines von dem Detektor (2) ausgegebenen ersten analogen Messsignals (S1-1), (St1)
Analog-Digital-Wandlung des ersten analogen Messsignals (S1-1) und Bildung mindestens eines digitalen Messsignals (S3), (St2)
Speicherung des digitalen Messsignals (S3), (St4)
Durchführung einer zweiten Messung mit dem Detektor (2) und Aufnahme eines von dem Detektor (2) ausgegebenen zweiten analogen Messsignals (S1-2), (St5)
analoge Differenzbildung aus dem zweiten analogen Messsignal (S1-2) und einem analogen Vergleichssignal (S5), das in Abhängigkeit des gespeicherten digitalen Messsignals (S3) der ersten Messung gebildet ist, und Bildung eines analogen Differenzsignals (S6), (St6) und
Digital-Analog-Wandlung des analogen Differenzsignals (S6) oder eines hieraus gebildeten analogen Signals (S7, S8) (St7).
